# EUROPÄISCHE PATENTSCHRIFT

(11) **EP 1 175 608 B1**
(45) Veröffentlichungstag und Bekanntmachung des Hinweises auf die Patenterteilung: **07.02.2007**
(21) Anmeldenummer: 00929399.4
(22) Anmeldetag: 20.04.2000
(51) Int. Cl.: G01N 1/00, H01J 49/04, G01N 31/10, G01N 35/02

(54) **VERFAHREN ZUR AUTOMATISIERTEN UNTERSUCHUNG KATALYTISCHER UND SPEKTROSKOPISCHER EIGENSCHAFTEN DER KOMPONENTEN KOMBINATORISCHER BIBLIOTHEKEN**
AUTOMATED METHOD FOR EXAMINING CATALYTIC AND SPECTROSCOPIC PROPERTIES OF THE COMPONENTS OF COMBINATORIAL LIBRARIES
PROCEDE AUTOMATISE D'ANALYSE DES PROPRIETES CATALYTIQUES ET SPECTROSCOPIQUES DES COMPOSANTS DE BIBLIOTHEQUES COMBINATOIRES

(30) Priorität: 27.04.1999 DE 19918956
(43) Veröffentlichungstag der Anmeldung: 30.01.2002
(73) Patentinhaber: HTE Aktiengesellschaft The High Throughput Experimentation Company, 69123 Heidelberg (DE)
(72) Erfinder: MAIER, Wilhelm, F., D-45470 Mülheim/Ruhr (DE); ORSCHEL, Matthias, D-45470 Mülheim/Ruhr (DE); KLEIN, Jens, D-45470 Mülheim/Ruhr (DE); LETTMANN, Christian, D-45470 Mülheim/Ruhr (DE); SCHMIDT, Hans, Werner, D-45470 Mülheim/Ruhr (DE)
(74) Vertreter: Ricker, Mathias
(86) Internationale Anmeldenummer: PCT/EP2000/003592
(87) Internationale Veröffentlichungsnummer: WO 2000/065326

(56) Entgegenhaltungen:
- WO-A-97/32208
- WO-A-98/15969
- DD-A- 234 941
- GB-A- 2 327 754
- US-A- 5 290 513
- JANDELEIT B ET AL: "KOMBINATORISCHE MATERIALFORSCHUNG UND KATALYSE" ANGEWANDTE CHEMIE,DE,VCH VERLAGSGESELLSCHAFT, WEINHEIM, Bd. 111, 1999, Seiten 2649-2689, XP000856114 ISSN: 0044-8249

## Beschreibung

Die vorliegende Erfindung beschreibt ein automatisches Verfahren zur ortsaufgelösten Durchführung von Reaktionen auf Materialbibliotheken und Analyse der entstehenden Produkte mit Hilfe eines einfachen Robotersystems und eines Massenspektrometers.

Das Verfahren bezieht sich auf die Bestimmung der Aktivität und Selektivität von Feststoffen oder Molekülen als Katalysatoren für Gasphasenreaktionen. Durch den speziellen Aufbau wird ein kommerzieller Pipettier- oder Syntheseroboter zur Positionierung der Meßleitungen eingesetzt, um Reaktionen auf einer kombinatorischen Bibliothek ortsaufgelöst zu untersuchen. Die Besonderheit des Verfahrens liegt in der Einfachheit des Aufbaus, das keinen speziellen Reaktor benötigt, sowie des problemlosen Wechsels zwischen Synthese und Screening.

Während sich die kombinatorische Chemie in Bereichen der organischen, biochemischen und pharmazeutischen Chemie als ein wichtiges Werkzeug zur Entwicklung neuer Verbindungen etabliert hat (z.B. Special issue: Combinatorial Chemistry, *Acc. Chem. Res.,* **1996,** 29; G. Lowe, *Chemical Society Reviews,* **1995,** 24 (5), 309; S. R. Wilson, A. W. Czarnik, *Combinatorial Chemistry - Synthesis and Applikation,* John Wiley & Sons, 1997), sind auf dem Gebiet der anorganischen Festkörpersynthese und Materialforschung sowie der Katalysatorentwicklung nur wenige Beispiele bekannt, bei denen kombinatorische Methoden zum Einsatz kommen. Stand der Technik ist die Herstellung von Materialbibliotheken durch physikalische Aufdampfmethoden durch die Kombination mit Maskierungstechniken, oder naßchemisch durch den Einsatz von Ink-Jet-Techniken oder die Verwendung von Syntheserobotern. Bibliotheksgößen varüeren hier von unter 100 Komponenten bis 25.000 Komponenten je Bibliothek. Essentiell für die Auswertung solcher Bibliotheken ist die Analyse bzw. Charakterisierung bestimmter Eigenschaften. Aufgrund der miniaturisierten Dimensionen, die zur Erstellung großer Materialbibliotheken notwendig sind, stehen nur minimale Probenmengen zur Verfügung.

Bei dem Bestreben, das katalytische Verhalten von Materialien innerhalb kombinatorischer Bibliotheken zu erfassen, stechen bis zum jetzigen Zeitpunkt nur wenige Beispiele heraus. So läßt sich die freiwerdende Reaktionswärme auf den Komponenten einer Katalysatorbibliothek mit Hilfe der emissionskorrigierten IR-Thermographie orstaufgelöst und mit hoher Empfindlichkeit in Gasphasen-Reaktionen mit heterogenen (A. Holzwarth, H.-W. Schmidt, W.F. Maier, *Angew. Chem.* **1998,** 110, 2788) und in flüssiger Phase mit homogenen und Enzymkataysatoren (M.T. Reetz, M.H. Becker, K.M. Kühling, A. Holzwarth, *Angew. Chem.* **1998**, 110, 2792) abbilden. Die Verwendung der IR-Thermographie erlaubt jedoch nur Aussagen über die relative Aktivität der Komponenten einer Bibliothek. Dies ist immer ungenügend, wenn mit Folge- oder Parallelreaktionen gerechnet werden muß, wie z.B. der Totaloxidation bei der Suche nach selektiven Oxidationskatalysatoren. Es ist daher wünschenswert, neben der IR-Thermographie über Analysenverfahren zu verfügen, die es erlauben, auch chemische Selektivitäten ortsaufgelöst direkt auf der Bibliothek möglichst automatisiert zu erfassen.

Die aktuellen Arbeiten von Weinberg et al. zeigen die Anwendung massenspektrometrischer Methoden zur Hochgeschwindigkeitsrasterung von Katalysator-Bibliotheken (P. Cong, R.D. Doolen, Q. Fan, D.M. Giaquinta, S. Guan, E.W. McFarland, D.M. Poojary, K. Self, H.W: Turner, W.H. Weinberg, *Angew. Chem.* **1999,** 111, 508, W.H. Weinberg, E.W. McFarland, P. Cong, S. Guan (Symyx Technologies), WO-A 98/15969 A2, **1998**). Weinberg und Mitarbeiter wiesen bei der CO-Oxidation mit O₂ oder NO an Metallegierungen aus Rh, Pd, Pt und Cu das gebildete CO₂ sowie die Eduktgase massenspektrometrisch nach. Das in obiger Patentanmeldung ausführlicher beschriebene System zur örtlich separierten Eduktzuführung und Produktabführung direkt via Bohrung in das Massenspektrometer ist in der Ausführung aufwendig und teuer. Es ist darauf ausgelegt, auch bei kleinsten Katalysatormengen von 2-4µg auf einem Katalysatorelement noch Aussagen zuzulassen. Damit ist eine aufwendige Modifizierung des Massenspektrometers um eine zweite Quadrupolblende ("ion guide") und die Konstruktion eines Vakuumkammersystems zur getrennten Synthese, Probenvorbehandlung und dem eigentlichen Testen nötig, um so einen direkten Transfer der Bibliothek aus der Präparation zum Massenspektrometer zu ermöglichen. Dadurch wird sowohl die Handhabung der Probe von außen als auch die Erzeugung praxisnaher Reaktionsbedingungen sehr erschwert. Das publizierte Beispiel (CO-Oxidation mit O₂ oder NO zu CO₂) unterscheidet nur Katalysatoraktivitäten und läßt keine Aussagen über Selektivitätsunterschiede der einzelnen Bibliotheksmitglieder zu. Bei komplexeren Reaktionen mit mehreren möglichen Produkten, die mit stark unterschiedlichen oder auch sehr ähnlichen Selektivitäten bei oft geringen Ausbeuten gebildet werden, versagt diese Methode bisher aufgrund der zu kleinen Produktmengen.

Wir haben nun überraschenderweise gefunden, daß mit einem Massenspektrometer, in Kombination mit einem Syntheseroboter die unterschiedliche katalytische Selektivität von Materialien auf einer Bibliothek für Oxidationsreaktionen zuverlässig und vollautomatisch erfasst werden kann. Der wesentliche Vorteil der vorliegenden Erfindung liegt in der Einfachheit des Aufbaus und der Untersuchungsbedingungen. Die von uns verwendeten Komponenten sind laborübliche Gerätschaften (Pipettierroboter und Massenspektrometer). Der Roboter wird eingesetzt, um die einzelnen Bibliothekskomponenten anzusteuern, über Versorgungsleitungen in Form von Kapillaren Reaktionsgase zuzuführen, über Signalleitungen Messungen durchzuführen oder Reaktionsprodukte aufzunehmen. Alle diese Zu- und Abführungen sind in einem Bündel von Kapillaren zusammengefaßt. Für massenspektrometrische Untersuchungen besteht das Kapillarbündel lediglich aus einer Gasversorgungskapillare und einer feinen Glaskapillare, über die das Produktgemisch angesaugt wird und die lang genug ist, um den nötigen Druckunterschied zwischen dem Vakuum des Massenspektrometers und dem Normaldruck der Bibliothek zu gewährleisten. Es wurde gefunden, daß es nicht nötig ist, einen eigenen geschlossenen Reaktor für die Untersuchung der Bibliothek einzusetzen. Während der Messungen wird die Bibliothek von unten auf Reaktionstemperatur beheizt. Es genügt, die Bibliothek mit einer durchbohrten Scheibe abzudecken und in die nach oben offenen Bohrungen das Kapillarbündel mit Hilfe des Syntheseroboters oder einer geeigneten Mechanik einzuführen und die Bibliothek während des Beströmens mit den Reaktionsgasen sukzessive zu vermessen. Mit diesem einfachen Aufbau ist es bereits gelungen, sowohl Oxidations-, als auch Reduktionsreaktionen auf Bibliotheken zu vermessen und Selektivitätsunterschiede der einzelnen Bibliothekskomponenten zuverlässig zu dokumentieren.

### Beispiel einer erfindungsgemäßen Meßanordnung:

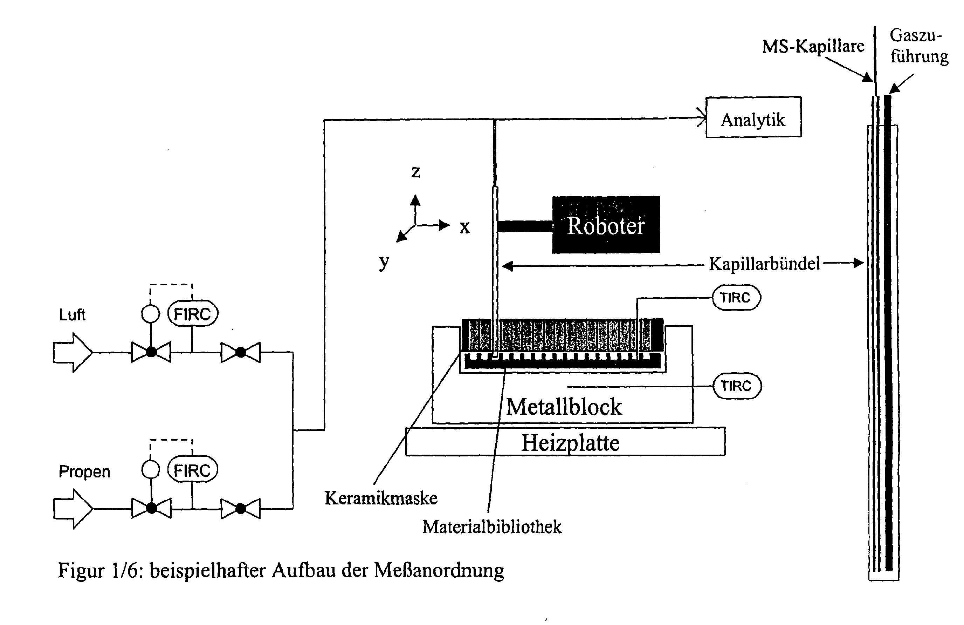

Figur 1 zeigt den schematischen Aufbau unserer Methode. In einem kommerziellen Pipettierroboter ist die Pipettiernadel des Roboters gegen das modifizierte Kapillarbündel auf der rechten Seite von Figur 1 ausgetauscht. Dieses Kapillarbündel besteht aus einer äußeren, umgebenden Stahlkapillare mit dem gleichen Außendurchmesser wie die Originalroboterkapillare, was den problemlosen gegenseitigen Wechsel ermöglicht. Im Inneren befinden sich die zur Versorgung, Überwachung und Messung der Reaktion nötigen Zu- und Ableitungen auf signalführende Leitungen. Diese sind in Form von Kapillaren, Lichtleitern oder elektrischen Leitern je nach Reaktionsführung frei wählbar. In den Beispielen wird eine der innenliegenden Kapillaren als Führung für die MS-Kapillare und eine andere als Eduktzuleitung genutzt. Zur Bestrahlung für Photoreaktionen ebenso wie zur zusätzlichen spektroskopischen Analyse (IR, VIS, UV, Raman) kann ein Lichtleiter in das Bündel eingebaut werden. Auch alle anderen über Kapillaren ansteuerbaren Analysenmethoden, wie Gaschromatographie, HPLC, GC-MS und Kapillarelektrophorese, lassen sich neben der erfindungsgemäßen massenspektrometrischen Analyse durch den Einbau geeigneter Kapillaren in das Kapillarbündel zur Auswertung von Materialbibliotheken nutzen.

Das System ist so ausgelegt, daß es in die Roboterführung eingebaut werden und vollautomatisch zu den Bibliothekskomponenten bewegt werden kann. Die Materialbibliothek kann über eine Heizplatte im Bereich von 20°C bis 1000°C temperiert werden. Die Temperaturabstrahlung über dem Trägermaterial der Bibliothek wird durch eine mit Bohrungen versehene Keramikabdeckmaske minimiert. Diese liegt auf der Bibliothek, läßt aber die einzelnen Bibliothekspunkte infolge der identischen Lochmaskenanordnung frei. Die Bohrungen auf der Bibliothek in der Keramikmaske erlauben eine präzise Positionierung des Kapillarbündels in der Bibliothek dicht über den einzelnen Komponenten. Die genaue Dosierung der Reaktanden erfolgt durch die Gaszuführungskapillare (rechte Seite von Figur 1). Als zuführende Kapillaren werden flexible Zuleitungen benutzt, um die Beweglichkeit des Roboters bei xyz-Bewegungen nicht zu beeinträchtigen. Über die MS-Kapillare kann die Zusammensetzung des Produktgemisches bestimmt und anhand geeigneter m/z-Signale identifiziert werden. Wahlweise kann die Materialbibliothek komplett Punkt für Punkt oder nur eine bestimmte Auswahl der Bibliothek abgetestet werden. Dies ermöglicht z.B. die sinnvolle Kombination mit emissionskorrigierter IR-Thermographie, da dann nur noch die mit Sicherheit katalytisch aktiven Bibliothekskomponenten auf ihre katalytische Selektivität untersucht werden müssen. In der im Beispiel 2 aufgeführten Untersuchung der selektiven Oxidation von Propen mit Luft an unterschiedlichen amorphen mikroporösen Mischoxid-(AMM)-Katalysatoren konnte die literaturbekannte Selektivität der unterschiedlichen Aktivkomponenten eindeutig und reproduzierbar nachgewiesen werden. Dieses Beispiel, dessen konventionelle Durchführung während einer Doktorarbeit [H. Orzesek, Univ. GH Essen, 1998] mehrere Monate in Anspruch nahm, konnte kombinatorisch innerhalb weniger Stunden durchgerührt werden. Dies dokumentiert eindrucksvoll die mögliche Zeitersparnis durch kombinatorisches Arbeiten.

Ein weiterer Vorteil der Meßanordnung kommt insbesondere dann zum Tragen, wenn auch zur Herstellung der Bibliothek der Pipetierroboter eingesetzt wurde, da dann die ortspezifischen Teile des Syntheses-Programms auch für die Analyse genutzt werden können (siehe Beispiel 1). Der Wechsel zwischen vollautomatischer Materialsynthese und vollautomatischem Reaktionsscreening gelingt durch den simplen Austausch von Pipettenkapillare durch das Kapillarbündel. Das System ist auch geeignet, um mehr als eine Komponente gleichzeitig zu vermessen. Hierzu muß nur das eine Kapillarbündel gegen ein Kapillarbündel-Array ausgetauscht werden. Das System läßt sich auch mit weiteren spektroskopischen Analysenverfahren kombinieren. Es wird damit möglich, UV-, Vis-, Raman- und IR-Spektren von Produkten als auch von der Einzelkomponentenoberfläche in der Bibliothek *in situ,* also während der Reaktionen, orts- und zeitaufgelöst zu verfolgen. Auch Photokatalyse ist so kombinatorisch durchführbar, wenn dem Kapillarbündel zur Untersuchung ein Lichtleiter beigefügt wird. Auch die Bestrahlung mit Lasern zur Reaktionsaktivierung, Materialsveränderung und zur spektroskopischen Charakterisierung läßt sich auf diese Weise sehr einfach realisieren. Das Verfahren ist insofern beschränkt, als es keine Untersuchungen unter Druck zuläßt. Unter absolutem Ausschluß von Luftsauerstoff oder unter Schutzgas kann gearbeitet werden, indem der relative kleine Syntheseroboter mit einer geeignete gasdichten Umhüllung zugeben wird, wie z.B. einer Glove-Box oder einem Plexiglasgehäuse.

### Ausführungsbeispiele

### Beispiel 1: Bibliotheksherstellung zur Katalyse der Verbrennung von Methan

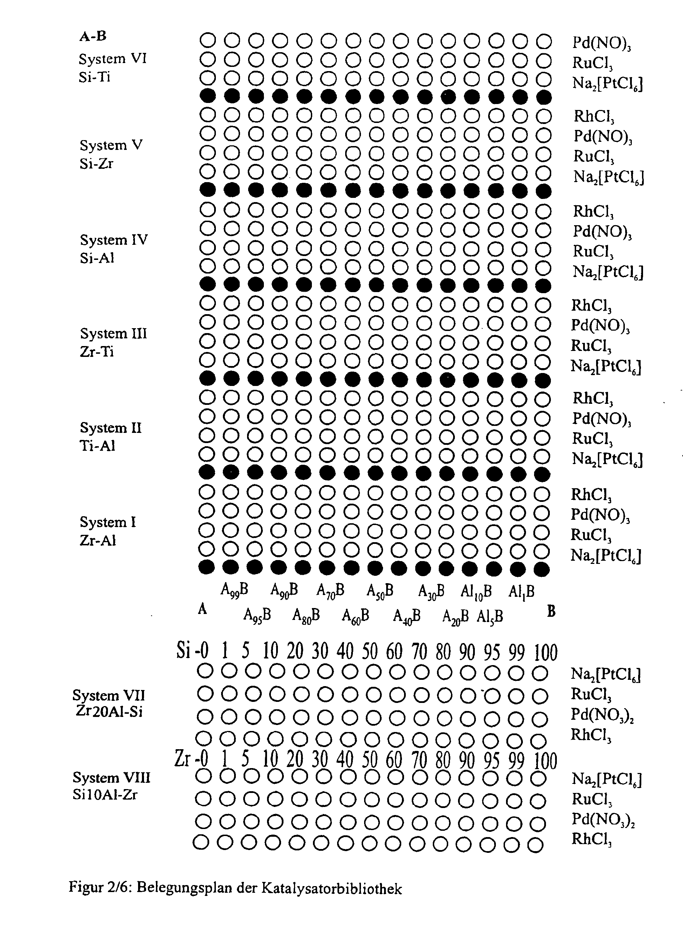

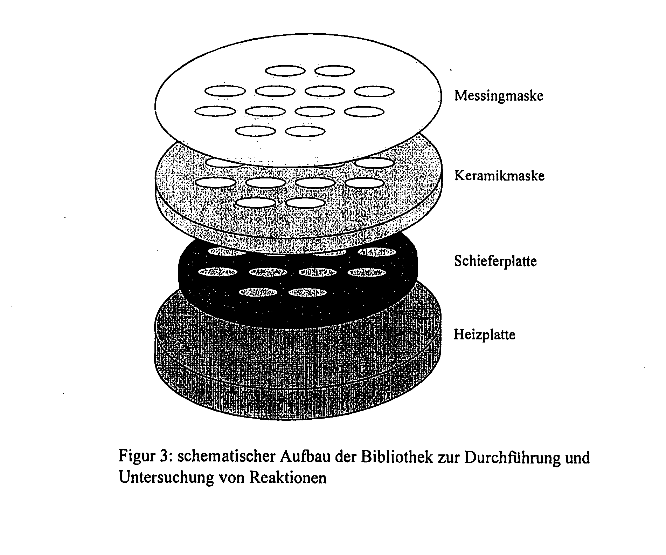

Als Trägerplatte wurde eine Schieferplatte (10 cm Durchmesser) mit 2 mm tiefen Bohrungen (Durchmesser 2 mm) im Pipettierroboter positioniert und mit den, für Katalysatorsynthese nötigen Lösungen befüllt. Die Katalysatorsynthese basierte auf dem Sol-Gel-Verfahren. Zum Schutz der Bohrungen in der Platte während der Befüllung wurde die Schieferplatte mit entsprechend durchbohrten Teflon-, Viton- und Stahlscheiben abgedeckt die durch entsprechende Verschraubungen angepreßt wurden. Als Basismaterialien für die Bibliothek wurden SiO₂, TiO₂, ZrO₂ und Al₂O₃ in variierender Zusammensetzung (AₓB) gewählt. Die Alkoxidvorstufen Si(OEt)₄, Ti(OⁿPr)₄, Zr(OⁿPr)₄ und Al(O^{sec}Bu)₃ wurden in alkoholischer Lösung vorgelegt. Als katalytisch aktive Zentren wurden dann Pt, Pd, Ru und Rh in Form von alkoholischen Metallsalzlösungen verwendet. Per Computerprogramm wurden mit dem Syntheseroboter aus diesen alkoholischen Lösungen 585 Sol-Gel-Mischungen in den einzelnen Bibliothekslöchern vorgelegt. Der Belegungsplan ist in Figur 2 dargestellt. Der tiefgestellte Index in Figur 2 gibt das molare Verhältniss der Basisoxide wieder. Der Aktivmetallgehalt, angedeutet durch die Edelmetallsalze in Figur 3, betrug in allen Materialien 3 mol%. Nach vollautomatischer Addition aller Sol-Gel-Komponenten wurde die Bibliothek 1 Tag bei Raumtemperatur und 2h bei 65°C vorgetrocknet. Nach Abnahme der Masken erfolgte die endgültige Kalzinierung der Bibliothek (Schieferplatte) bei 250°C für 3h.

### Beispiel 2: Untersuchung der Verbrennung von Methan

Die Katalysatorbibliothek wurde auf dem Heizblock fixiert und im Pipettierroboter passend angeordnet. Die Bibliothek wurde mit entsprechend durchbohrten Keramik- und Messingmasken abgedeckt (siehe Figur 3). Der Pipettierroboter wurde mit dem benötigten Kapillarbündel versehen und die zu untersuchenden Positionen im Steuercomputer aus dem Syntheseprogramm abgerufen.

Über Massendurchflussregler wurde ein Methan / synthetische Luft-Verhältniss von 0,02 bei einem Gesamtfluß von 7ml/min in der zuführenden Kapillare eingestellt. Die Produktbildung wurde massenspektrometrisch anhand des Massensignals für CO₂ (m/z = 44) registriert.

Die Materialien wurden in Schritten von 10 bzw. 50 °C über einen Temperaturbereich von 250°C bis 600 °C untersucht. Während bei vielen Komponenten eine deutliche Aktivität erst bei höheren Temperaturen über 300 °C erkennbar war, zeigten andere Komponenten über den gesamten Temperaturbereich keine Aktivität.

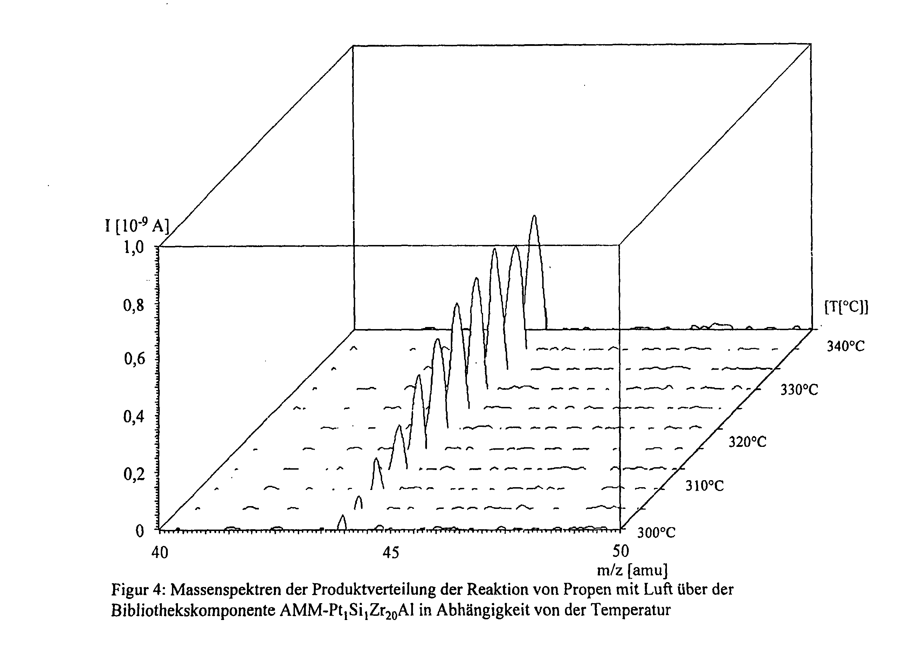

Figur 4 zeigt typische Ergebnisse an dem Bibliothekspunkt in der 2. Zeile und 2.Spalte in System 7. Es handelt sich dabei um eine ternäre Mischung (20mol-% ZrO₂ 79mol-%Al₂O₃, 1mol-% SiO₂), die als katalytisch aktive Komponente 3mol-% Pt^{IV} enthält. Deutlich zu sehen am CO₂-Peak (m/z 44) ist die katalytische Verbrennung ab 300°C, bei 320°C ist die Kohlendioxidbildung konstant.

### Beispiel 3: Oxidation von Propen

Allgemein wurde wie in Beipiel 2 beschrieben verfahren. Neben Produkten der Totaloxidation (CO und CO₂) können bei dieser Reaktion unterschiedliche Hauptprodukte in unterschiedlichem Ausmaß auftreten, die aufgrund typischer Massensignale identifizierbar sind: Acrolein (m/z = 56), 1,5-Hexadien (m/z = 67), Benzol (m/z = 78) und Allylalkohol oder Propenoxid (m/z = 58). Als Bibliothek wurde eine Schieferplatte mit 33 verschiedenen AMM-Katalysatoren (je 2,5 mg) eingesetzt (Tabelle 1).

**Tabelle 1: AMM-Katalysatorbibliothek***

| | 1 | 2 | 3 | 4 | 5 | 6 |
|---|---|---|---|---|---|---|
| 1 | Sc₂Si | Y₂Si | V₅Si | Ta₂Si | Cr₂Si | Fe₂Si |
| 2 | Co₂Si | Rh₂Si | Ni₂Si | Cu₆Si | Ag₂Si | Au₂Si |
| 3 | In₂Si | Si | Sn₅Si | Bi₁₀Si | Te₂Si | W₃Ti |
| 4 | W₃Zr | Mo₃Ti | Mo₃Zr | Sb₃Ti | Sb₃Zr | Cu₃Ti |
| 5 | Cu₃Zr | In₃Ti | In₃Zr | Re₃Ti | Re₃Zr | Cr₃Ti |
| 6 | Cr₃Zr | Fe₃Ti | Fe₃Zr | | | |

| | | | | | | |
|---|---|---|---|---|---|---|
| * amorphe, mikroporöse Mischoxide; die tiefgestellte Zahl gibt den molaren %-Anteil des katalytisch aktiven Metalloxids an, der %-Gehalt des Matrixoxids ergibt sich aus der Differenz zu 100% (z.B. Fe₃Zr = 3% FeOₓ in 97% ZrO₂) | | | | | | |

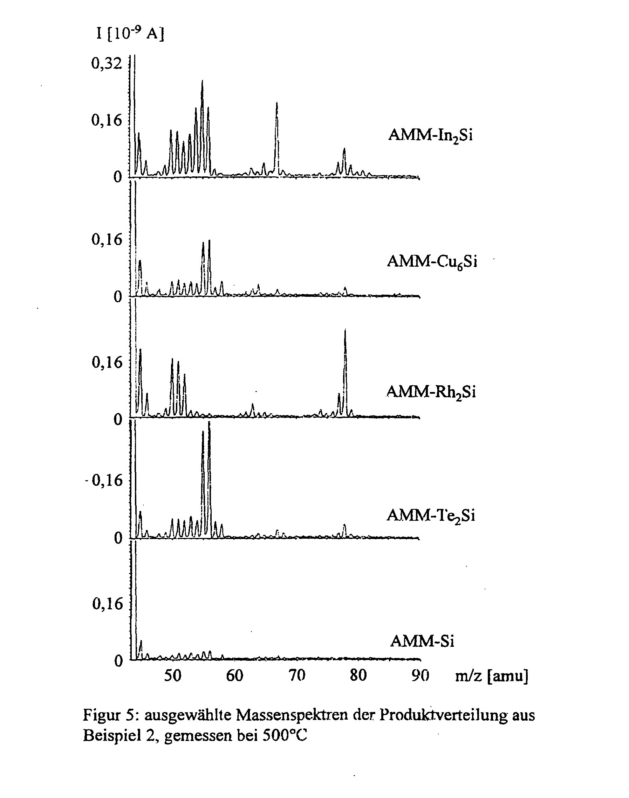

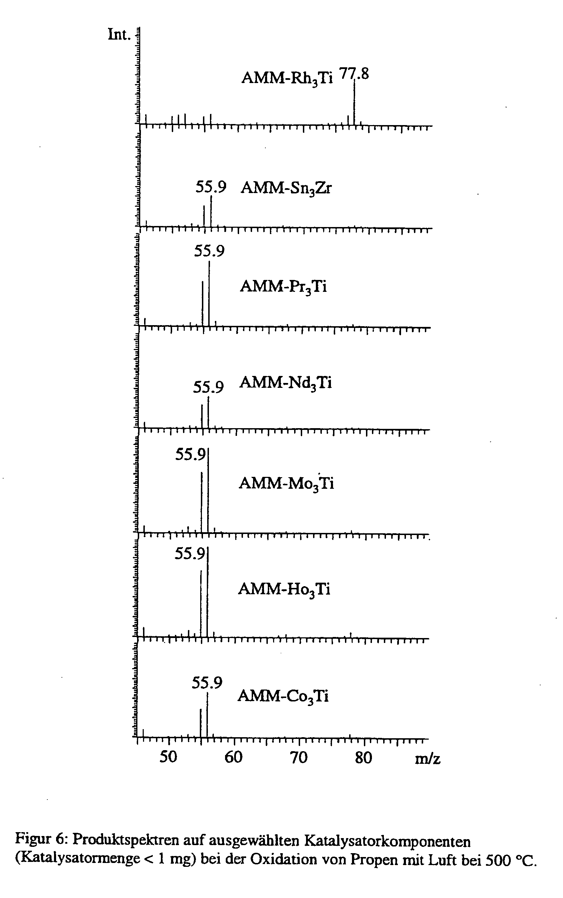

Über Massendurchflussregler wurde ein Propen / synthetische Luft-Verhältniss von 0,4 bei einem Gesamtfluß von 7ml/min in der zuführenden Kapillare eingestellt. Die Reaktion wurde bei 450, 500 und 550 °C untersucht. Eine Auswahl typischer Ergebnisse ist in Figur 5 (500 °C) dargestellt. Deutlich sichtbar ist die unterschiedliche Selektivität der verschiedenen Katalysatormaterialien. Die in Figur 6 dargestellten Ergebnisse reproduzieren in nahezu perfekter Weise die bereits bekannte Ergebnisse derselben Reaktion im konventionellen Strömungsrohrreaktor im Labor-maßstab (ca. 500mg Katalysatormasse, V/t = 200ml/min) (Orzesek, Dissertation Universität GH Essen, 1998; Orzesek et al., Chem. Eng. Technol. im Druck).

### Beispiel 4: Hydrierreaktion

Analog Beispiel 1 wurden Komponenten auf einer Bibliothek von amorphen mikroporösen Mischoxiden (je 2,5 mg) mit einer Mischung von 1 ml/min Propen und 2,5 ml/min H₂ beströmt (Temp. 70 °C). Im MS zeigten sich bei den Mischungen AMM-Pd₁Si und AMM-Pt₂Si ein intensives Signal bei m/z = 29 (signifikant für die Bildung von n-Propan). Bei AMM-Pt₁Ti und AMM-Pd₁Ti war nur ein schwaches, bei allen anderen vermessenen Komponenten war kein signifikantes m/z =29 Signal detektierbar.

### Beispiel 5: Photokatalyse

Analog Beispiel 1 wurde eine Bibliothek mit TiO₂-Photokatalysatore bei einer Temperatur von 30 °C mit aceton- und wasserhaltiger Luft beströmt. Zusätzlich zur MS-Kapillare und der Gaszuführung enthielt das Kapillarbündel noch einen Lichtleiter, mit dem die Komponentenoberfläche intensiv mit Licht bestrahlt wurde (Lichtquelle: 50 W Halogenglühlampe mit Fokussiereinrichtung, Lichtleiterinnendurchmesser 1 mm). Im Massenspektrometer zeigte sich ein Abfall der Acetonkonzentration (m/e = 58) reproduzierbar mit Einschalten der Beleuchtungsquelle.

### Beispiel 6: Oxidation von Propen untersucht mit doppelt fokussierendem Massenpektrometer

Während in den Beispielen 2-5 die entstehenden gasförmigen Produkte mit Hilfe eines einfachen Massenspektrometers analysiert wurden, macht Beispiel 6 die Vorteile des Einsatzes von Massenspektrometern mit höherer Empfindlichkeit und besserer Auflösung deutlich. So kann z.B. an Stelle eines einfachen Massenspektrometers auch ein doppelt fokussierendes Sektorfeldgerät oder ein Ionen-Cyclotron-Resonanz-Massenspektrometer (ICR-MS) über die Kapillare gekoppelt mit dem Analyseroboter eingesetzt werden. Der Einsatz solcher Geräte hat den Vorteil drastisch erhöhter Empfindlichkeit und analytischer Auflösung. Dies bedeutet, daß mit wesentlich kleineren Katalysatormengen oder geringerer Gesamtoberfläche gearbeitet werden kann und daß MS-Fragmente gleicher Masse, aber unterschiedlicher chemischer Zusammensetzung, wie z.B. Kohlenmonoxid, Ethylen und Stickstoff (alle m/z = 28) grundlinienaufgelöst in kombinatorischen Experimenten erfasst werden können. Die Empfindlichkeit der Messungen wird so groß, daß auch glasartige Katalysatoren, wie sie häufig in robotergesteuerten Synthesen erzeugt werden, in Mengen < 0.1 mg noch zuverlässig MS-meßbare Produkt-Intensitäten ergeben. Während in den Beispielen 2-5 mit einer unbeheizten Kapillare nur gasförmige Produkte analysiert wurden, wird in Beispiel 6 eine beheizte Kapillare eingesetzt, die es erlaubt auch schwerer flüchtige Verbindungen zu detektieren.

Allgemein wurde wie in Beispiel 3 verfahren, allerdings wurde ein doppelt fokussierendes Massenspektrometer (Auflösung bis 10.000) an Stelle des in Beispielen 1-5 eingesetzen Gasanalysengerätes verwendet. Als Bibliothek diente eine, durch Robotersynthesen hergestellte AMM-Bibliothek, vergleichbar der in Beispiel 2, aber mit geringeren Katalysatormengen. Die Katalysatoren lagen nicht mehr pulverförmig, wie in den Beispielen 1-5 vor (je 2,5 mg), sondern als glasartige Schicht in Mengen von 0,2-1 mg. Die Kapillare zwischen dem Roboter und dem Massenspektrometer wurde mit einem 2m Thermoelement (1mm Durchmesser) in einem Schrumpfschlauch verbunden und durch Anlegen einer Spannung auf Temperaturen bis 250 °C beheizt. Durch die Beheizung der Kapillare können auch schwerer flüchtige Produkte analysiert werden. In einfachen Tests wurde gefunden, daß mit dieser beheizten Kapillare z.B. Phenol in der Luft über einer Phenol-haltigen Flasche oder Glykol über einer Glykol-haltigen Flasche im MS nachweisbar werden. Versuche mit dem in Beispielen 1-5 eingesetzen Quadrupol-Massenspektrometer zeigten keine meßbaren Intensitäten (zu schlechtes Signal-Rausch-Verhältnis). Figur 6 zeigt anhand ausgewählter Produktspektren, die nun mit dem Sektorfeld-Massenspektrometer erhalten wurden, daß Acrolein (m/z = 56) bzw. Benzol (m/z = 78) selektiv auf den einzelnen Katalysatoren gebildet werden. Die Abbildung zeigt, daß katalytische Aktivität und Selektivität auch auf kleinsten Katalysatormengen zuverlässig erkennbar ist.

## Patentansprüche

1. Verfahren zur automatisierten Durchführung von Reaktionen auf Materialbibliotheken und zur Analyse der bei dieser Reaktion entstehenden Produkte mit Hilfe eines Robotersystems, mittels eines Massenspektrometers in einem nicht geschlossenen Reaktor, wobei ein Kapillarbündel umfassend eine Gasversorgungskapillare und eine feine Glaskapillare, über die das Produktgemisch angesaugt wird und die lang genug ist, um den nötigen Druckunterschied zwischen dem Vakuum des Massenspektrometers und dem Normaldruck der Bibliothek zu gewährleisten und ggfls. Lichtleiter oder elektrische Leiter, oder ein entsprechendes Kapillarbündel-Array vom Robotersystem über den einzelnen Komponenten einer Materialbibliothek zeitlich nacheinander bzw. über mehreren Komponenten gleichzeitig positioniert wird, wobei die Komponenten der Materialbibliotheken durch eine mit Bohrungen versehene Platte abgedeckt sind, und die Kapillarbündel vom Roboter in die Bohröffnungen dicht über den einzelnen Komponenten positioniert werden, und wobei im Rahmen des Verfahrens die Aktivität und Selektivität von Feststoffen oder Molekülen als Katalysatoren für Gasphasenreaktionen bestimmt wird.

2. Verfahren nach Anspruch 1, wobei das Kapillarbündel zusätzlich eine signalführende Leitung in Form eines Lichtleiters zur Bestrahlung der Komponenten der Materialbibliothek mit elektromagnetischer Strahlung umfasst.

3. Verfahren nach Anspruch 1, wobei zusätzlich eine signalführende Leitung im Kapillarbündel in Form eines Lichtleiters zu einem weiteren Detektor führt.

4. Verfahren nach Anspruch 3, wobei der weitere Detektor ein UV-, VIS, IR- oder Ramanspektrometer ist.

5. Verfahren nach Anspruch 1-4, wobei der Ablauf der Reaktion als Funktion der Zeit registriert wird.

6. Verfahren nach Anspruch 1 - 5, wobei die Materialbibliothek auf einer beheizbaren Platte fixiert ist.

7. Verfahren nach Anspruch 1, wobei die Reaktionen Oxidations- oder Reduktionsreaktionen in der Gasphase sind.

8. Verfahren nach Anspruch 1, wobei als Robotersystem ein Pipettierroboter eingesetzt wird, in dem die Pipette ersetzt ist durch das Bündel von Kapillaren für Zu- und Abführungsleitungen mit ggfls. zusätzlichen signalführenden Leitungen und/oder Lichtleitern.

## Claims

1. Method for the automated conduct of reactions on material libraries and for analysis of the products resulting from these reactions with the aid of a robot system, by means of a mass spectrometer in an unclosed reactor, wherein a capillary bundle comprising a gas supply capillary and a fine glass capillary, via which the product mixture is sucked and which is long enough to ensure the necessary pressure difference between the vacuum of the mass spectrometer and the normal pressure of the library, and optionally light guides or electrical leads, or a corresponding capillary bundle array is positioned by the robot system over the individual components of a material library chronologically in succession or over a plurality of components simultaneously, wherein the components of the material libraries are covered by a plate provided with bores and the capillary bundles are positioned tightly over the individual components in the bore openings by the robot, and wherein the activity and selectivity of solids or molecules as catalysts for gas phase reactions are determined in the scope of the method.

2. Method according to Claim 1, wherein the capillary bundle additionally comprises a signal-carrying line in the form of a light guide for exposing the components of the material library to electromagnetic radiation.

3. Method according to Claim 1, wherein a signal-carrying line in the form of a light guide in the capillary bundle additionally leads to a further detector.

4. Method according to Claim 3, wherein the further detector is a UV, VIS, IR or Raman spectrometer.

5. Method according to Claims 1 - 4, wherein the progress of the reaction is registered as a function of time.

6. Method according to Claims 1-5, wherein the material library is fixed on a heatable plate.

7. Method according to Claim 1, wherein the reactions are oxidation or reduction reactions in the gas phase.

8. Method according to Claim 1, wherein a pipetting robot in which the pipette is replaced by the bundle of capillaries for feed and discharge lines, optionally with additional signal-carrying lines and/or light guides, is used as the robot system.

## Revendications

1. Procédé de réalisation automatisée de réactions sur bibliothèque combinatoire et d'analyse des produits formés lors de ces réactions à l'aide d'un système robotisé, au moyen d'un spectromètre de masse dans un réacteur non fermé, un faisceau de capillaires comprenant un capillaire d'alimentation en gaz et un fin capillaire de verre par lequel le mélange de produit est aspiré et qui est assez long pour garantir la différence nécessaire de pression entre le vide du spectromètre de masse et la pression normale de la bibliothèque, et éventuellement un conducteur de lumière ou un conducteur électrique, ou un ensemble correspondant de faisceaux de capillaires du système robotisé, étant positionné successivement au-dessus de chaque composant d'une bibliothèque combinatoire et/ou simultanément au-dessus de plusieurs composants, les composants de la bibliothèque combinatoire étant recouverts d'une plaque munie de trous, et les faisceaux de capillaires du système robotisé étant positionnés dans les ouvertures des trous de façon hermétique au-dessus de chaque composant, et l'activité et la sélectivité de solides ou de molécules étant déterminées, dans le cadre du procédé, comme catalyseurs pour des réactions en phase gazeuse.

2. Procédé selon la revendication 1, le faisceau de capillaires comprenant en plus un conducteur de signaux sous la forme d'un conducteur de lumière pour l'illumination des composants de la bibliothèque combinatoire par un rayonnement électromagnétique.

3. Procédé selon la revendication 1, un conducteur de signaux dans le faisceau de capillaires, sous la forme d'un conducteur de lumière, menant en plus à un autre détecteur.

4. Procédé selon la revendication 3, l'autre détecteur étant un spectromètre UV, VIS, IR ou Raman.

5. Procédé selon les revendications 1 à 4, le déroulement de la réaction étant enregistré comme une fonction du temps.

6. Procédé selon les revendications 1 à 5, la bibliothèque combinatoire étant fixée sur une plaque chauffante.

7. Procédé selon la revendication 1, les réactions étant des réactions par oxydation ou par réduction dans la phase gazeuse.

8. Procédé selon la revendication 1, un robot de pipetage étant utilisé comme système robotisé, dans lequel la pipette est remplacée par le faisceau de capillaires pour des conduites d'acheminement et de prélèvement, avec éventuellement des conducteurs de signaux supplémentaires et/ou des conducteurs de lumière.
